# EUROPEAN PATENT APPLICATION

(11) **EP 4 597 038 A1**
(43) Date of publication of application: **06.08.2025**
(21) Application number: 23885685.0
(22) Date of filing: 27.10.2023
(51) Int. Cl.: G01D 1/18, G05B 23/02

(54) **ANOMALY DIAGNOSIS DEVICE AND ANOMALY DIAGNOSIS METHOD**

(30) Priority: 01.11.2022 JP 2022175311
(71) Applicant: JFE Steel Corporation, Tokyo 100-0011 (JP)
(72) Inventor: MATSUSHITA, Masafumi, Tokyo 100-0011 (JP); HIRATA, Takehide, Tokyo 100-0011 (JP)
(74) Representative: Hoffmann Eitle
(86) International application number: PCT/JP2023/038961
(87) International publication number: WO 2024/095929

(57) **Abstract**

An anomaly diagnosis device includes an obtaining unit configured to obtain, from equipment in operation, a signal indicating a state of the equipment as multidimensional data including a signal at current time and a signal at time a predetermined time prior to the current time, a comparing unit configured to compare the obtained multidimensional data with multidimensional data indicating a state of the equipment during normal operation and including a signal at specific time and a signal at time a predetermined time prior to the specific time to calculate a distance between the obtained multidimensional data and the multidimensional data indicating the state of the equipment during normal operation and including the signal at the specific time and the signal at the time the predetermined time prior to the specific time, and a determining unit configured to determine anomaly when the calculated distance is larger than a predetermined threshold.

## Description

### Field

The present invention relates to an anomaly diagnosis device and an anomaly diagnosis method. Background

In anomaly monitoring of a manufacturing line including a combination of various types of equipment, such as a steel process, it is important to provide an anomaly monitoring system or the like that may be generally applied without being conscious of a type of an object to be monitored and is capable of detecting an anomaly of the object highly accurately.

For example, Patent Literature 1 proposes a method in which a plurality of measurement values collected from equipment is regarded as a feature in a variable space and anomaly is efficiently detected based on a distance from normal data in the variable space.

### Citation List

### Patent Literature

Patent Literature 1: JP 2013-214292 A

### Summary

### Technical Problem

However, since the technique disclosed in Patent Literature 1 is a method of detecting an anomaly based on correlation between multiple signals, it is assumed that a combination of signals having a characteristic relationship exists.

Meanwhile, as a concept of detecting an anomaly, the focus may be on the dynamic characteristics of a single time-series signal itself. Since the equipment changes over time with use, for example, operation of the equipment may be slower than the normal time when a change occurs in friction or resistance. In such a case, while a temporal change in the operation needs to be investigated in detail, the technique disclosed in Patent Literature 1 is based on the correlation between signals so that the time-dependent dynamic characteristics may not be evaluated.

The present invention has been conceived in view of the above, and an object of the present invention is to provide an anomaly diagnosis device and an anomaly diagnosis method capable of, even in batch driving equipment that repeats the same operation at the time of driving or equipment that continuously operates while maintaining a constant operation, for example, performing monitoring based on time-dependent dynamic characteristics of signals output therefrom by focusing on a single time-series signal. Furthermore, an object is to provide an anomaly diagnosis device and an anomaly diagnosis method capable of diagnosing, in addition to an anomalous state experienced in the past regarding a manufacturing state of a manufacturing process, a similar unexperienced anomalous state. Moreover, an object is to provide an anomaly diagnosis device and an anomaly diagnosis method capable of diagnosing, in equipment that operates and interlocks with a plurality of pieces of equipment with a certain time difference, an anomalous state of the equipment based on a signal indicating a state of the equipment indicating the interlocking operation.

### Solution to Problem

To solve the above-described problem and achieve the object, an anomaly diagnosis device according to the present invention includes: an obtaining unit configured to obtain, from equipment in operation, a signal indicating a state of the equipment as multidimensional data including a signal at current time and a signal at time a predetermined time prior to the current time; a comparing unit configured to compare the obtained multidimensional data with multidimensional data indicating a state of the equipment during normal operation and including a signal at specific time and a signal at time a predetermined time prior to the specific time, and calculate a distance between the obtained multidimensional data and the multidimensional data indicating the state of the equipment during normal operation and including the signal at the specific time and the signal at the time the predetermined time prior to the specific time; and a determining unit configured to determine anomaly when the calculated distance is larger than a predetermined threshold.

Moreover, in the above-described anomaly diagnosis device according to the present invention, the predetermined time is determined based on a time constant of the equipment or based on a cycle of the signal when the signal is periodic.

Moreover, in the above-described anomaly diagnosis device according to the present invention, the multidimensional data indicating the state of the equipment in operation includes: data regarding an operating condition of the equipment; and multidimensional distribution in which the signal at the current time, the signal at the time the predetermined time prior to the current time, and the data regarding the operating condition are set as coordinate axes.

Moreover, in the above-described anomaly diagnosis device according to the present invention, the multidimensional data indicating the state of the equipment during the normal operation includes: a signal obtained from the equipment normally operating during the operation; and multidimensional distribution in which the signal at the specific time and the signal at the time the predetermined time prior to the specific time are set as coordinate axes.

Moreover, in the above-described anomaly diagnosis device according to the present invention, the multidimensional data indicating the state of the equipment during the normal operation includes: data regarding an operating condition of the equipment; and multidimensional distribution in which the signal at the specific time, the signal at the time the predetermined time prior to the specific time, and the data regarding the operating condition are set as the coordinate axes.

To solve the above-described problem and achieve the object, an anomaly diagnosis device according to the present invention includes: an obtaining unit configured to obtain, from a plurality of pieces of equipment that operates in an interlocking manner, a plurality of signals indicating a state of the equipment as multidimensional data including a signal at current time and a signal at time a predetermined time prior to the current time; a comparing unit configured to compare the obtained multidimensional data with multidimensional data indicating a state of the plurality of pieces of equipment during normal operation and including a signal at specific time and a signal at time a predetermined time prior to the specific time, and calculate a distance between the obtained multidimensional data and the multidimensional data indicating the state of the plurality of pieces of equipment during normal operation and including the signal at the specific time and the signal at the time the predetermined time prior to the specific time; and a determining unit configured to determine anomaly when the calculated distance is larger than a predetermined threshold.

To solve the above-described problem and achieve the object, an anomaly diagnosis method according to the present invention includes: a step of obtaining, from equipment in operation, a signal indicating a state of the equipment as multidimensional data including a signal at current time and a signal at time a predetermined time prior to the current time; a step of comparing the obtained multidimensional data with multidimensional data indicating a state of the equipment during normal operation and including a signal at specific time and a signal at time a predetermined time prior to the specific time, and calculating a distance between the obtained multidimensional data and the multidimensional data indicating the state of the equipment during normal operation and including the signal at the specific time and the signal at the time the predetermined time prior to the specific time; and a step of determining anomaly when the calculated distance is larger than a predetermined threshold.

To solve the above-described problem and achieve the object, an anomaly diagnosis method according to the present invention includes: a step of obtaining, from a plurality of pieces of equipment that operates in an interlocking manner, a plurality of signals indicating a state of the equipment as multidimensional data including a signal at current time and a signal at time a predetermined time prior to the current time; a step of comparing the obtained multidimensional data with multidimensional data indicating a state of the plurality of pieces of equipment during normal operation and including a signal at specific time and a signal at time a predetermined time prior to the specific time, and calculating a distance between the obtained multidimensional data and the multidimensional data indicating the state of the plurality of pieces of equipment during normal operation and including the signal at the specific time and the signal at the time the predetermined time prior to the specific time; and a step of determining anomaly when the calculated distance is larger than a predetermined threshold.

### Advantageous Effects of Invention

According to an anomaly diagnosis device and an anomaly diagnosis method according to the present invention, a single time-series signal is focused on, whereby, even in batch driving equipment that repeats the same operation at the time of driving, for example, monitoring may be carried out based on time-dependent dynamic characteristics of signals output therefrom. Furthermore, according to the anomaly diagnosis device and the anomaly diagnosis method according to the present invention, a single time-series signal is focused on, whereby, even in equipment that continuously operates while maintaining a constant operation, for example, monitoring may be carried out based on time-dependent dynamic characteristics of signals output therefrom. Furthermore, according to the anomaly diagnosis device and the anomaly diagnosis method according to the present invention, time-dependent dynamic characteristics of a single signal are focused on, whereby, in addition to an anomalous state experienced in the past regarding a manufacturing state of a manufacturing process, a similar unexperienced anomalous state may be diagnosed. Moreover, according to the anomaly diagnosis device and the anomaly diagnosis method according to the present invention, in equipment that operates and interlocks with a plurality of pieces of equipment with a certain time difference, an anomalous state of the equipment may be diagnosed based on a signal indicating a state of the equipment indicating the interlocking operation.

### Brief Description of Drawings

[FIG. 1] FIG. 1 is a diagram illustrating a schematic configuration of an anomaly diagnosis device according to an embodiment of the present invention.
[FIG. 2] FIG. 2 is a flowchart illustrating a procedure of an anomaly diagnosis method to be executed by the anomaly diagnosis device according to the embodiment of the present invention.
[FIG. 3] FIG. 3 is a diagram illustrating an exemplary waveform of an equipment signal indicating periodic movement.
[FIG. 4] FIG. 4 is two-dimensional distribution illustrating correlation between a value of an original coordinate system and a value of a time-delayed coordinate system for the same waveform as that in FIG. 3.
[FIG. 5] FIG. 5 is a diagram illustrating an exemplary waveform of a position signal when batch driving equipment is driven (before and after driving).
[FIG. 6] FIG. 6 is two-dimensional distribution illustrating correlation between a value of the original coordinate system and a value of the time-delayed coordinate system for the same waveform as that in FIG. 5.
[FIG. 7] FIG. 7 is a diagram illustrating exemplary peripheral speeds (rotational speeds) of three different table motors of a transport table of a hot rolling process, in which (a) illustrates a peripheral speed of a table motor A, (b) illustrates a peripheral speed of a table motor B, and (c) illustrates a peripheral speed of a table motor C.
[FIG. 8] FIG. 8 is a diagram illustrating exemplary distribution of two-dimensional data obtained by combining peripheral speed data of the table motor A and peripheral speed data of the table motor B in FIG. 7.

### Description of Embodiments

An anomaly diagnosis device and an anomaly diagnosis method according to an embodiment of the present invention will be described with reference to the drawings. Note that the present invention is not limited to the following embodiment, and constituent elements in the following embodiment include those that may be easily replaced by those skilled in the art or those that are substantially the same.

### (Anomaly Diagnosis System)

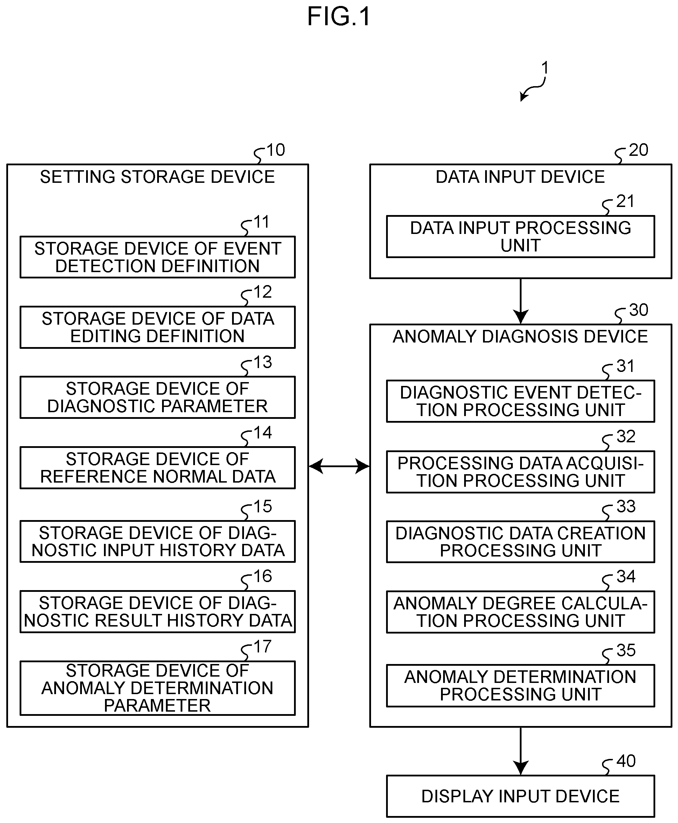

An anomaly diagnosis system according to the embodiment will be described with reference to FIG. 1. An anomaly diagnosis system 1 includes a setting storage device 10, a data input device 20, an anomaly diagnosis device 30, and a display input device 40. The setting storage device 10, the data input device 20, the anomaly diagnosis device 30, and the display input device 40 are connected by wire or wirelessly via a bus or the like, and are configured such that data may be transmitted to and received from each other.

The setting storage device 10 is implemented by, for example, a general-purpose database or the like. The setting storage device 10 includes a storage device of event detection definition 11, a storage device of data editing definition 12, a storage device of diagnostic parameter 13, and a storage device of reference normal data 14. Furthermore, the setting storage device 10 includes a storage device of diagnostic input history data 15, a storage device of diagnostic result history data 16, and a storage device of anomaly determination parameter 17.

The storage device of event detection definition 11 stores event detection definitions (logic) when a diagnostic event detection processing unit 31 detects a diagnostic event. The storage device of data editing definition 12 stores creation procedures and the like when a diagnostic data creation processing unit 33 creates diagnostic data.

The storage device of diagnostic parameter 13 stores various parameters and the like required when the diagnostic data creation processing unit 33 creates diagnostic data. The storage device of reference normal data 14 stores data in a normal state (hereinafter referred to as "normal data") obtained from equipment normally operating during operation.

The storage device of diagnostic input history data 15 stores diagnostic conditions and the like input when an anomaly degree calculation processing unit 34 performs anomaly diagnosis. The storage device of diagnostic result history data 16 stores results of the anomaly diagnosis performed by the anomaly degree calculation processing unit 34. The storage device of anomaly determination parameter 17 stores various parameters and the like required when the anomaly degree calculation processing unit 34 performs the anomaly diagnosis.

The data input device 20 is for inputting various types of information to the anomaly diagnosis device 30. The data input device 20 includes a data input processing unit 21 that inputs sensor signals obtained via a programmable logic controller (PLC) or a distributed control system (DCS) to the anomaly diagnosis device 30 by continuous processing or batch processing.

The anomaly diagnosis device 30 collects time-series data from a plant including a large number of pieces of equipment, and performs anomaly diagnosis of a process by focusing on time-dependent dynamic characteristics of the collected time-series data. Examples of the "process" in the present embodiment include a manufacturing process of a steel product, a power generation process of a power generation facility, and a conveyance process of a conveyance facility.

The anomaly diagnosis device 30 includes, for example, a processor (arithmetic processing unit) including a central processing unit (CPU) and the like, and a memory (main storage unit) including a random access memory (RAM), a read only memory (ROM), and the like. Then, the processor executes a computer program to control each component and the like, thereby implementing a function that matches a predetermined purpose. The anomaly diagnosis device 30 functions as the diagnostic event detection processing unit 31, a processing data acquisition processing unit 32, the diagnostic data creation processing unit 33, the anomaly degree calculation processing unit 34, and an anomaly determination processing unit 35 through the execution of the computer program described above.

Furthermore, the anomaly diagnosis device 30 may separately include a storage unit that stores various processing results and the like. This storage unit includes, for example, a recording medium such as an erasable programmable ROM (EPROM), a hard disk drive (HDD), a solid state drive (SSD), a removable medium, or the like. Examples of the removable medium include a disk recording medium such as a universal serial bus (USB) memory, a compact disc (CD), a digital versatile disc (DVD), a Blu-ray (registered trademark) disc (BD), or the like.

The diagnostic event detection processing unit 31 determines, based on the event detection definitions stored in the storage device of event detection definition 11, whether or not an event to be diagnosed has occurred in time-series signals (hereinafter referred to as "equipment signals") indicating a state of equipment in operation.

When the diagnostic event detection processing unit 31 has determined that an event to be diagnosed has occurred, the processing data acquisition processing unit 32 obtains processing data (equipment signals) from the data input device 20.

The diagnostic data creation processing unit 33 creates a diagnostic data set by extracting, from the equipment signals, signals at the current time and signals in the past. That is, the diagnostic data creation processing unit 33 creates, for the equipment signals obtained by the processing data acquisition processing unit 32, a diagnostic data set including values of the equipment signals in the original coordinate system to be subject to the anomaly diagnosis and values of the equipment signals in one or more time-delayed coordinate systems.

Specifically, when the diagnostic data set includes two-dimensional data, a time-series signal with a delay is y(t - τ) where an original time-series signal observed is represented by y(t) and a time delay is represented by τ. Furthermore, (y(t), y(t - τ)), which is a combination of those signals, is the target two-dimensional data. Such pairs of two-dimensional data or sets of multidimensional data are obtained in time series to generate the diagnostic data set. Here, the data set to be generated may be created with a predetermined time period of data acquisition from the equipment in operation. The data acquisition time may be matched with, for example, an acquisition time of normal data to be described later, but there is no particular problem if it is shorter or longer as long as the data is data in operation.

In addition, in the present embodiment, the "original coordinate system" and the "time-delayed coordinate system" described above have the same value represented by the coordinate systems as a value of observed data, but represent values of observed data according to time of acquisition when the data is distributed and displayed in multiple dimensions using a difference in the time of acquisition of the observed data. That is, the "original coordinate system" is a coordinate axis representing a value of observed data at the original time of acquisition, and the "time-delayed coordinate system" is a coordinate axis representing a value of observed data at time delayed by a predetermined time from the original observed data. In this manner, the diagnostic data creation processing unit 33 obtains the equipment signals from the equipment in operation as multidimensional data including a signal at the current time and a signal at time a predetermined time prior to the current time.

The multidimensional data created by the diagnostic data creation processing unit 33 is, for example, multidimensional distribution in which an equipment signal at the current time and an equipment signal at time a predetermined time prior to the current time are set as coordinate axes. For example, when the multidimensional data includes only one equipment signal at time a predetermined time prior to the current time, the distribution is two-dimensional as in the example described above. Furthermore, when the multidimensional data includes a plurality of equipment signals at time a predetermined time prior to the current time, the distribution is three-dimensional or more. Note that "including a plurality of equipment signals at time a predetermined time prior to the current time" indicates, for example, including a signal with a 5-step delay, a signal with a 10-step delay, a signal with a 15-step delay, and so on relative to the original equipment signal. As described above, by using the diagnostic data set including the signals of the plurality of time-delayed coordinate systems with respect to the original equipment signal, characteristics of the waveform of the original equipment signal may be more appropriately extracted.

The "predetermined time", that is, the magnitude of the time delay amount (which is also simply referred to as "time delay amount") is determined based on characteristics **(e.g.,** waveform, etc.) of the equipment signal to be handled. The predetermined time may be determined based on, for example, a time constant of the equipment to be diagnosed. Furthermore, for example, when the equipment signal is a periodic signal, the predetermined time may be determined based on, for example, the period of the equipment signal.

By setting the magnitude of the time delay amount to, for example, an integral multiple of a sampling period of the equipment signal, the calculation cost may be reduced. Furthermore, for example, in a case of handling an equipment signal that periodically fluctuates, it is preferable to use a time delay amount shorter than the period, such as 1/2 or 1/4 of the period of the equipment signal. Furthermore, in a case of capturing behavior of a leading edge (or trailing edge) of signals measured in association with acceleration/deceleration of a drive device or the like, it is preferable to use a time delay amount shorter than the rise time (or fall time).

Furthermore, in a device controlled in various operating modes, behavior (time-dependent dynamic characteristics) of the equipment signal to be handled may depend on an operating mode and a control amount. For example, in a case of a granulating mixer, an inertial load of a rotating body driven by an electric motor changes depending on a type and amount of a material to be inserted, and thus dynamic characteristics of the torque current of the electric motor associated with the operation depends on operating conditions.

As described above, when equipment in which dynamic characteristics of time-series signals change depending on operating conditions of the equipment to be diagnosed is set as a target for the diagnosis, the diagnostic data creation processing unit 33 creates a diagnostic data set to which data regarding one or more operating conditions (e.g., control set values, etc.) is added. In this case, the multidimensional data created by the diagnostic data creation processing unit 33 includes data regarding the operating conditions of the equipment, and is in multidimensional distribution with a signal at the current time, a signal at time a predetermined time prior to the current time, and data regarding the operating conditions as coordinate axes.

Moreover, in equipment that operates and interlocks with a plurality of pieces of equipment with a certain time difference, an anomalous state of the equipment may be diagnosed based on a signal indicating a state of the equipment indicating the interlocking operation. Examples of the plurality of pieces of equipment include a table motor in a transport table of a hot rolling process.

The transport table of the hot rolling process includes a plurality of transport rolls for conveying a steel sheet. Each of those transport rolls is driven by the table motor that collectively drives a predetermined number of rolls, and the table motor is arranged for each predetermined number of transport rolls to be driven. Thus, those plurality of table motors similarly operates in the interlocking manner with a predetermined time difference.

In such a case, the diagnostic data creation processing unit 33 obtains a plurality of signals indicating a state of the equipment from the plurality of pieces of equipment operating in the interlocking manner as multidimensional data including a signal at the current time and a signal at time a predetermined time prior to the current time. That is, the diagnostic data creation processing unit 33 extracts, as equipment signals, a signal of one of the pieces of equipment to be diagnosed at the current time and a signal of another piece of equipment that operates in the interlocking manner in the past, thereby creating the diagnostic data set.

When the diagnostic data includes two-dimensional data, the two-dimensional data includes the same type of equipment signals of two pieces of equipment. When the time delay of the equipment operating in the interlocking manner is known in advance, a known value may be used as a time difference between current data and past data. Furthermore, when the time delay of the equipment operating in the interlocking manner is unknown, a large number of delay time axes may be set to adopt a time delay that maximizes correlation between the standard time axis and the delay time axis. At this time, when the correlation may be regarded as linear correlation, a Pearson's correlation coefficient may be used. Furthermore, when the correlation is non-linear, a maximal information coefficient (MIC), which represents the strength of the correlation of the non-linear distribution, or the like may be used. Note that the diagnostic data may be three-dimensional or more. In addition, the multidimensional data may include data regarding the operating conditions of the equipment.

Note that, while the same type of signals of the peripheral speed of the table motor is used in the descriptions above, different types of signals may be used as the data set as long as the signals have correlation, such as a motor speed, a motor current, or a start command (pulse signal) to the motor.

The anomaly degree calculation processing unit 34 compares the multidimensional data created by the diagnostic data creation processing unit 33 with the normal data created in advance, and calculates a distance (deviation) between them as an anomaly degree.

The "normal data" described above is an equipment signal obtained from equipment normally operating during operation while setting a data acquisition time in consideration of equipment operation and dynamic characteristics of the equipment, and is stored in the storage device of reference normal data 14 in advance. In addition, the normal data is multidimensional data indicating a state of the equipment during normal operation and including an equipment signal at specific time and an equipment signal at time a predetermined time prior to the specific time. Specifically, this multidimensional data is multidimensional data in which the equipment signal at the specific time and the equipment signal at the time a predetermined time prior to the specific time are set as coordinate axes, and is a data group obtained by setting the data acquisition time in consideration of the equipment operation and the dynamic characteristics of the equipment as described above, and thus the multidimensional data has multidimensional distribution. Here, the data acquisition time of the normal data may be set in a period around one cycle as long as the equipment operation is periodic. In addition, it may be set within a range up to the vicinity of the settling if a response has a known time constant, such as a step response. Moreover, in a case of none of the above, the acquisition time may be set according to the start and end of the target operation of the equipment.

Note that, when equipment in which dynamic characteristics of time-series signals change depending on the operating conditions of the equipment to be diagnosed is set as a target for the diagnosis, the anomaly degree calculation processing unit 34 uses the normal data including the data regarding one or more operating conditions. In this case, the normal data used by the anomaly degree calculation processing unit 34 has multidimensional distribution in which the signal at the specific time, the signal at the time a predetermined time prior to the specific time, and the data regarding the operating conditions are set as coordinate axes.

The anomaly degree calculation processing unit 34 calculates, as an anomaly degree, a distance (deviation) between the normal data and the multidimensional data created by the diagnostic data creation processing unit 33. The anomaly degree calculation processing unit 34 may calculate, for example, a Euclidean distance between the normal data and the multidimensional data created by the diagnostic data creation processing unit 33 as a distance therebetween.

In this manner, at the time of calculating the distance between the normal data and the multidimensional data created by the diagnostic data creation processing unit 33, the anomaly degree calculation processing unit 34 uses the multidimensional distribution in the coordinate system including the original coordinates and the time delay coordinates as a geometric feature of those pieces of data.

Furthermore, as described above, when the time-dependent dynamic characteristics of the equipment signal to be handled depends on the operating conditions of the equipment, the anomaly degree calculation processing unit 34 calculates a distance between the multidimensional distributions obtained by adding the data regarding the operating conditions, such as control set values, as the coordinate axis in addition to the two coordinate axes described above. As described above, even when the target equipment signal has more complex time-dependent dynamic characteristics, it may be handled as a geometric feature in the multidimensional distribution by adding the coordinates regarding the operating conditions, the coordinates having different time delay amounts, and the like.

When the distance calculated by the anomaly degree calculation processing unit 34 is larger than a predetermined threshold, the anomaly determination processing unit 35 determines that there is an anomaly, and detects an anomaly event. Note that the distance calculated here will be described later. Furthermore, when the distance calculated by the anomaly degree calculation processing unit 34 is smaller than the predetermined threshold, the anomaly determination processing unit 35 determines that it is normal. Then, the anomaly determination processing unit 35 outputs the anomaly diagnosis result and the detected anomaly event to the display input device 40.

The display input device 40 is for displaying an anomaly diagnosis result and the like input from the anomaly diagnosis device 30. The display input device 40 is implemented by, for example, a general-purpose display or the like, such as a liquid crystal display or an organic display.

### (Anomaly Diagnosis Method)

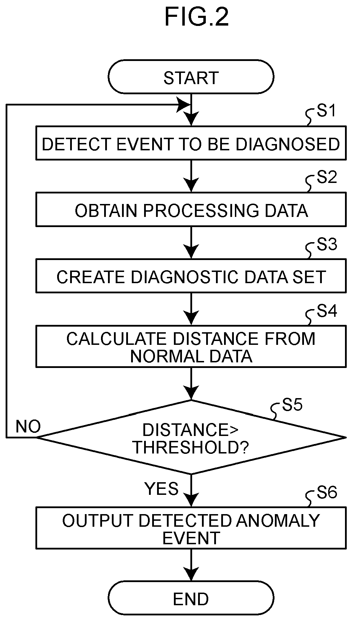

The anomaly diagnosis method according to the embodiment will be described with reference to FIG. 2. First, the diagnostic event detection processing unit 31 detects an event to be diagnosed from equipment signals of the equipment in operation (Step S1). Then, the processing data acquisition processing unit 32 obtains processing data (equipment signals) from the data input device 20 (Step S2).

Next, the diagnostic data creation processing unit 33 creates, for the processing data, a diagnostic data set including values of the equipment signals in the original coordinate system to be subject to the anomaly diagnosis and values of the equipment signals in one or more time-delayed coordinate systems (Step S3). Then, the anomaly degree calculation processing unit 34 compares the diagnostic data set (multidimensional data) created by the diagnostic data creation processing unit 33 with normal data created in advance, and calculates a distance therebetween (Step S4). Specifically, in this step, a distance to each point of the normal data is calculated for each point of the diagnostic data set, for example, and a nearest neighbor distance to the normal data is calculated.

Then, the anomaly determination processing unit 35 determines whether or not the nearest neighbor distance calculated in Step S4 is larger than a predetermined threshold (Step S5). Here, a maximum value, a minimum value, an average value, and the like may be calculated for the nearest neighbor distance of each point, and any one or a combination of a plurality of the values may be used for the determination. If it is determined in Step S5 that the calculated distance is larger than the predetermined threshold (Yes in Step S5), the anomaly determination processing unit 35 outputs the detected anomaly event to the display input device 40 (Step S6), and the present process is terminated. On the other hand, if it is determined in Step S5 that the calculated distance is equal to or smaller than the predetermined threshold (No in Step S5), the anomaly determination processing unit 35 returns to the processing of Step S1, and repeats the processing of Step S1 and subsequent steps.

As described above, in the anomaly diagnosis method according to the embodiment, the series of Steps S1 to S6 is continuously applied to the time-series signals constantly measured in the equipment, whereby the target signals may be monitored in real time.

### (Examples)

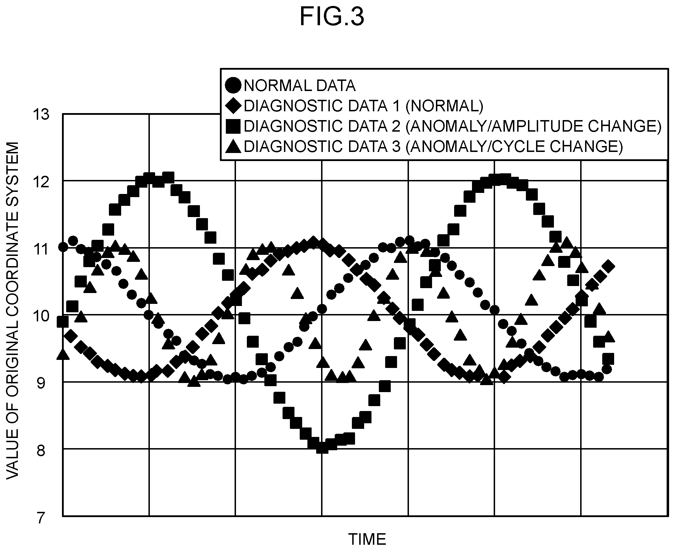

Examples of the anomaly diagnosis device and the anomaly diagnosis method according to the embodiment will be described with reference to FIGS. 3 to 8.

FIG. 3 illustrates an exemplary waveform of an equipment signal indicating periodic movement. Examples of the equipment signal indicating such periodic movement include a current, a rotational speed, and the like of a drive motor of equipment in which an eccentric body is rotationally driven, such as a granulating mixer.

In FIG. 3, the horizontal axis represents time, and the vertical axis represents a value of the original coordinate system. In addition, in the same drawing, normal data indicates data of the equipment in normal operation. Furthermore, diagnostic data 1 is data created by the anomaly diagnosis device, and indicates data in a normal state. Furthermore, diagnostic data 2 is data created by the anomaly diagnosis device, and indicates data with anomalous amplitude. Furthermore, diagnostic data 3 is data created by the anomaly diagnosis device, and indicates data with an anomalous cycle.

In FIG. 3, the diagnostic data 1 is data in a normal state, but a phase of the waveform is not aligned as compared with the normal data. Thus, for example, it is difficult to determine normality/abnormality by comparing only the magnitude of the equipment signals with respect to a predetermined elapsed time from the diagnostic start point (data extraction start point) designated without considering the phase.

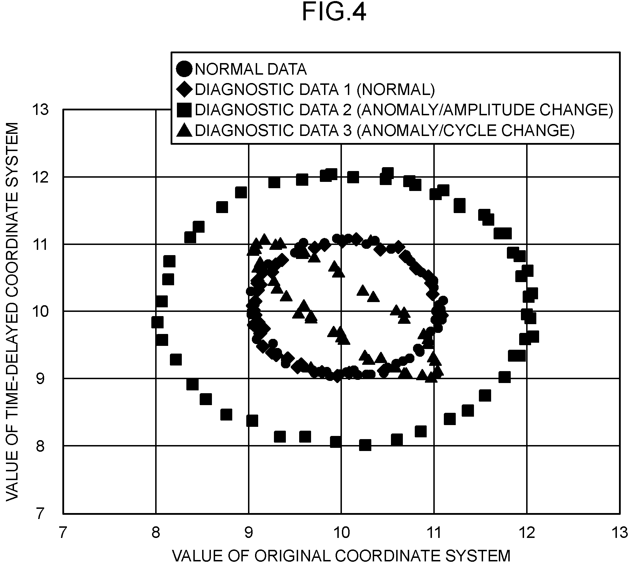

Meanwhile, FIG. 4 illustrates, as two-dimensional distribution, correlation between a value of the original coordinate system and a value of the time-delayed coordinate system by creating data of the time-delayed coordinate system for each of the waveforms same as those in FIG. 3. In the drawing, the horizontal axis represents a value of the original coordinate system, and the vertical axis represents a value of the time-delayed coordinate system.

As illustrated in FIG. 4, by removing the time axis from the original coordinate system, a normal waveform and an anomalous waveform may be separated and sorted. That is, since the distribution of the diagnostic data 1 substantially overlaps the distribution of the normal data, it may be determined that the diagnostic data 1 is normal. On the other hand, since the distribution of the diagnostic data 2 and 3 deviates from the distribution of the normal data, it may be determined that the diagnostic data 2 and 3 are anomalous.

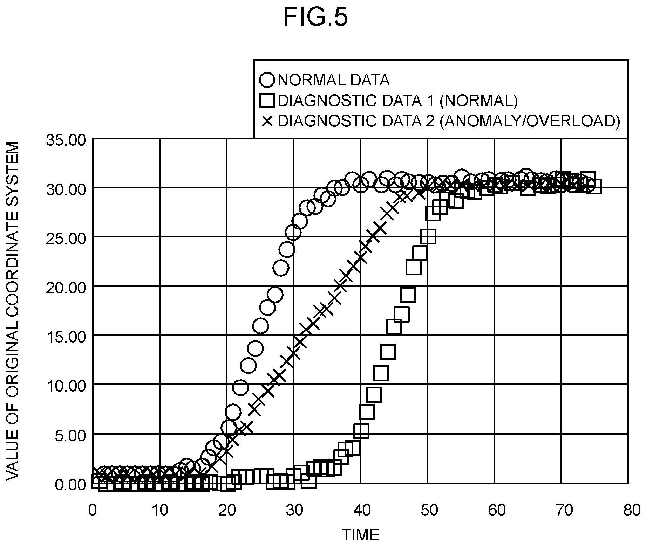

Next, FIG. 5 illustrates an exemplary waveform of a position signal when batch driving equipment is driven (before and after driving). Examples of such an equipment signal indicating rising movement include a position signal of a side guide of a hot rolling line in the steel field.

In FIG. 5, the horizontal axis represents time, and the vertical axis represents a value of the original coordinate system. In addition, in the same drawing, normal data indicates data of the equipment in normal operation. Furthermore, diagnostic data 1 is data created by the anomaly diagnosis device, and indicates data in a normal state. Furthermore, diagnostic data 2 is data created by the anomaly diagnosis device, and indicates anomalous data at a time of being in an overloading condition due to, for example, mechanical friction of a drive mechanism or the like.

While the diagnostic data 1 is data in a normal state in FIG. 5, the drive start timing is different from that of the normal data, and thus it is difficult to determine that the diagnostic data 1 is normal only by comparing values of observed values at individual time-series points. That is, as illustrated in the drawing, even when the values of the original coordinate system are compared with each other, it is difficult to separate and sort a normal waveform and an anomalous waveform.

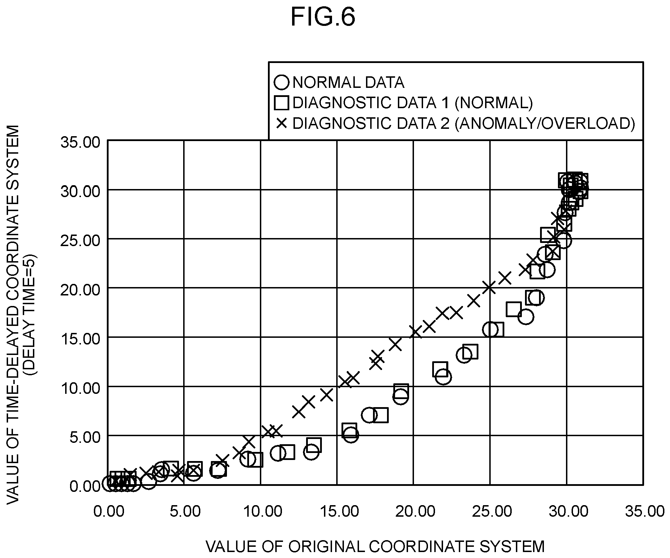

Meanwhile, FIG. 6 illustrates, as two-dimensional distribution, correlation between a value of the original coordinate system and a value of the time-delayed coordinate system by creating data of the time-delayed coordinate system for each of the waveforms same as those in FIG. 5. In the drawing, the horizontal axis represents a value of the original coordinate system, and the vertical axis represents a value of the time-delayed coordinate system.

As illustrated in FIG. 6, by removing the time axis from the original coordinate system, a normal waveform and an anomalous waveform may be separated and sorted. That is, since the distribution of the diagnostic data 1 substantially overlaps the distribution of the normal data, it may be determined that the diagnostic data 1 is normal. On the other hand, since the distribution of the diagnostic data 2 deviates from the distribution of the normal data, it may be determined that the diagnostic data 2 is anomalous.

Here, for example, each transport roll of the transport table of the hot rolling process is accelerated to a predetermined speed defined by conveyance conditions of a hot-rolled steel sheet before the hot-rolled steel sheet to be subject to batch production is conveyed. Furthermore, in the transport table, a large number of table motors are arranged along a conveyance line, and sequentially operate from the upstream side. At this time, when there is a transport table that fails to operate or fails to be accelerated to the predetermined speed due to physical interference or a bearing failure of each transport roll or a failure of the motor body itself such as insulation deterioration, a failure of the transport table itself, slip scratches on a sheet bar, and the like may be induced. The anomaly diagnosis device and the anomaly diagnosis method according to the embodiment may also be used to diagnose an anomalous state of a plurality of pieces of equipment that operates in an interlocking manner with a certain time difference, such as the table motor described above.

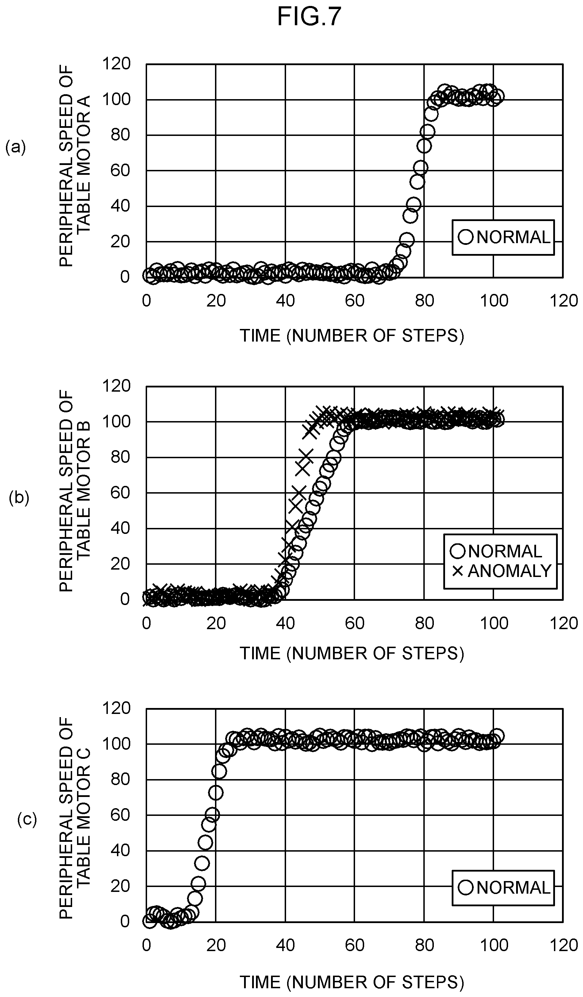

For example, FIG. 7 illustrates exemplary peripheral speeds (rotational speeds) of three different table motors of the transport table of the hot rolling process. In the drawing, the vertical axis represents a peripheral speed of a table motor, and represents a ratio (%) to the standard rotational speed. In addition, the horizontal axis represents time, and represents the number of steps for each sampling period. The sampling frequency may be appropriately determined, and may be, for example, 100 msec. In the drawing, it may be seen that three table motors A, B, and C are accelerated in an interlocking manner with a predetermined time delay. Furthermore, anomalous data is also illustrated for the table motor B.

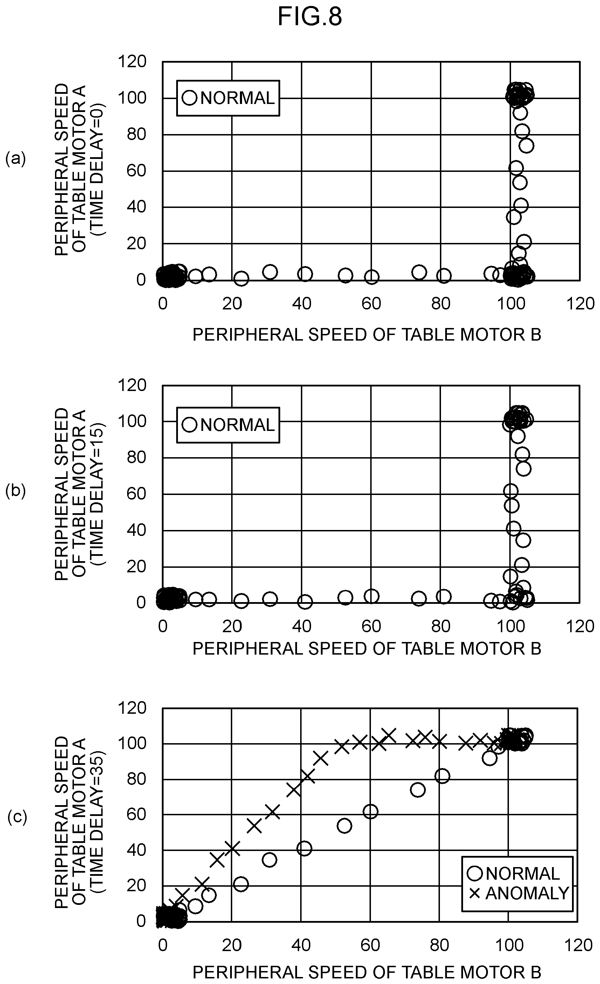

Meanwhile, FIG. 8 illustrates exemplary distribution of two-dimensional data obtained by combining peripheral speed data of the table motor A and peripheral speed data of the table motor B. In FIG. 8, (a) illustrates distribution of two-dimensional data obtained by combining the peripheral speed data of the table motor B with the peripheral speed data of the table motor A with no time delay. In addition, (b) of FIG. 8 illustrates distribution of two-dimensional data obtained by combining the peripheral speed data of the table motor B with the peripheral speed data of the table motor A with a time delay = 15 steps. In addition, (c) of FIG. 8 illustrates distribution of two-dimensional data obtained by combining the peripheral speed data of the table motor B with the peripheral speed data of the table motor A with a time delay = 35 steps.

As is clear from (a) and (b) of FIG. 7, the signal of the table motor A and the signal of the table motor B have a delay of 35 steps, and in (c) of FIG. 8 illustrating the locus of the two-dimensional data with that delay, the correlation therebetween may be clearly understood. Furthermore, the distribution of the two-dimensional data in the anomalous state illustrated in the drawing is clearly deviated from the distribution of the data in the normal state, whereby the data in the anomalous state may be determined to be anomalous.

According to the anomaly diagnosis device and the anomaly diagnosis method according to the embodiment described above, a single time-series signal is focused on, whereby, even in batch driving equipment that repeats the same operation at the time of driving or equipment that continuously operates while maintaining a constant operation, for example, monitoring may be carried out based on time-dependent dynamic characteristics of signals output therefrom. Furthermore, according to the anomaly diagnosis device and the anomaly diagnosis method according to the embodiment, time-dependent dynamic characteristics of a single signal are focused on, whereby, in addition to an anomalous state experienced in the past regarding a manufacturing state of a manufacturing process, a similar unexperienced anomalous state may be diagnosed.

Furthermore, according to the anomaly diagnosis device and the anomaly diagnosis method according to the embodiment, a plurality of time-series signals is focused on, whereby, even in equipment that interlocks with a plurality of pieces of equipment that repeats the same operation with a certain time difference, monitoring may be carried out based on time-dependent interlocking characteristics of signals output therefrom. Furthermore, according to the anomaly diagnosis device and the anomaly diagnosis method according to the embodiment, time-dependent interlocking characteristics of a plurality of signals are focused on, whereby, in addition to an anomalous state experienced in the past regarding the manufacturing state of the manufacturing process, a similar unexperienced anomalous state may be diagnosed.

While the embodiment to which the invention made by the present inventors is applied has been described above, the present invention is not limited by the descriptions and the drawings constituting a part of the disclosure of the present invention according to the present embodiment. In other words, other embodiments, examples, operational techniques, and the like made by those skilled in the art based on the present embodiment are all included in the scope of the present invention.

### Reference Signs List

- 1: ANOMALY DIAGNOSIS SYSTEM
- 10: SETTING STORAGE DEVICE
- 11: STORAGE DEVICE OF EVENT DETECTION DEFINITION
- 12: STORAGE DEVICE OF DATA EDITING DEFINITION
- 13: STORAGE DEVICE OF DIAGNOSTIC PARAMETER
- 14: STORAGE DEVICE OF REFERENCE NORMAL DATA
- 15: STORAGE DEVICE OF DIAGNOSTIC INPUT HISTORY DATA
- 16: STORAGE DEVICE OF DIAGNOSTIC RESULT HISTORY DATA
- 17: STORAGE DEVICE OF ANOMALY DETERMINATION PARAMETER
- 20: DATA INPUT DEVICE
- 21: DATA INPUT PROCESSING UNIT
- 30: ANOMALY DIAGNOSIS DEVICE
- 31: DIAGNOSTIC EVENT DETECTION PROCESSING UNIT
- 32: PROCESSING DATA ACQUISITION PROCESSING UNIT
- 33: DIAGNOSTIC DATA CREATION PROCESSING UNIT
- 34: ANOMALY DEGREE CALCULATION PROCESSING UNIT
- 35: ANOMALY DETERMINATION PROCESSING UNIT
- 40: DISPLAY INPUT DEVICE

## Claims

1. An anomaly diagnosis device comprising:
an obtaining unit configured to obtain, from equipment in operation, a signal indicating a state of the equipment as multidimensional data including a signal at current time and a signal at time a predetermined time prior to the current time;
a comparing unit configured to
compare the obtained multidimensional data with multidimensional data indicating a state of the equipment during normal operation and including a signal at specific time and a signal at time a predetermined time prior to the specific time, and
calculate a distance between the obtained multidimensional data and the multidimensional data indicating the state of the equipment during normal operation and including the signal at the specific time and the signal at the time the predetermined time prior to the specific time; and
a determining unit configured to determine anomaly when the calculated distance is larger than a predetermined threshold.

2. The anomaly diagnosis device according to claim 1, wherein the predetermined time is determined based on a time constant of the equipment or based on a cycle of the signal when the signal is periodic.

3. The anomaly diagnosis device according to claim 1, wherein the multidimensional data indicating the state of the equipment in operation includes:
data regarding an operating condition of the equipment; and
multidimensional distribution in which the signal at the current time, the signal at the time the predetermined time prior to the current time, and the data regarding the operating condition are set as coordinate axes.

4. The anomaly diagnosis device according to claim **1,** wherein the multidimensional data indicating the state of the equipment during the normal operation includes:
a signal obtained from the equipment normally operating during the operation; and
multidimensional distribution in which the signal at the specific time and the signal at the time the predetermined time prior to the specific time are set as coordinate axes.

5. The anomaly diagnosis device according to claim 4, wherein the multidimensional data indicating the state of the equipment during the normal operation includes:
data regarding an operating condition of the equipment; and
multidimensional distribution in which the signal at the specific time, the signal at the time the predetermined time prior to the specific time, and the data regarding the operating condition are set as the coordinate axes.

6. An anomaly diagnosis device comprising:
an obtaining unit configured to obtain, from a plurality of pieces of equipment that operates in an interlocking manner, a plurality of signals indicating a state of the equipment as multidimensional data including a signal at current time and a signal at time a predetermined time prior to the current time;
a comparing unit configured to
compare the obtained multidimensional data with multidimensional data indicating a state of the plurality of pieces of equipment during normal operation and including a signal at specific time and a signal at time a predetermined time prior to the specific time, and
calculate a distance between the obtained multidimensional data and the multidimensional data indicating the state of the plurality of pieces of equipment during normal operation and including the signal at the specific time and the signal at the time the predetermined time prior to the specific time; and
a determining unit configured to determine anomaly when the calculated distance is larger than a predetermined threshold.

7. An anomaly diagnosis method comprising:
a step of obtaining, from equipment in operation, a signal indicating a state of the equipment as multidimensional data including a signal at current time and a signal at time a predetermined time prior to the current time;
a step of comparing the obtained multidimensional data with multidimensional data indicating a state of the equipment during normal operation and including a signal at specific time and a signal at time a predetermined time prior to the specific time, and calculating a distance between the obtained multidimensional data and the multidimensional data indicating the state of the equipment during normal operation and including the signal at the specific time and the signal at the time the predetermined time prior to the specific time; and
a step of determining anomaly when the calculated distance is larger than a predetermined threshold.

8. An anomaly diagnosis method comprising:
a step of obtaining, from a plurality of pieces of equipment that operates in an interlocking manner, a plurality of signals indicating a state of the equipment as multidimensional data including a signal at current time and a signal at time a predetermined time prior to the current time;
a step of comparing the obtained multidimensional data with multidimensional data indicating a state of the plurality of pieces of equipment during normal operation and including a signal at specific time and a signal at time a predetermined time prior to the specific time, and calculating a distance between the obtained multidimensional data and the multidimensional data indicating the state of the plurality of pieces of equipment during normal operation and including the signal at the specific time and the signal at the time the predetermined time prior to the specific time; and
a step of determining anomaly when the calculated distance is larger than a predetermined threshold.
